# EUROPÄISCHE PATENTSCHRIFT

(11) **EP 0 409 015 B1**
(45) Veröffentlichungstag und Bekanntmachung des Hinweises auf die Patenterteilung: **25.05.1994**
(21) Anmeldenummer: 90112931.2
(22) Anmeldetag: 06.07.1990
(51) Int. Cl.: C01B 33/025, C22C 35/00, C22B 1/244

(54) **Verfahren für die Herstellung von Rohstoff-Formlingen und danach hergestellte Rohstoff-Formlinge**
Method for the production of raw material moulded bodies and raw material moulded bodies so produced
Procédé de fabrication de corps moulés de matières premières et corps moulés de matières premières ainsi fabriqués

(30) Priorität: 15.07.1989 DE 3923446
(43) Veröffentlichungstag der Anmeldung: 23.01.1991
(73) Patentinhaber: APPLIED INDUSTRIAL MATERIALS CORPORATION AIMCOR, Deerfield Illinois 60015 (US)
(72) Erfinder: Lask, Gert-Wilhelm, Dr. Dipl.-Chem., D-6636 Berus (DE)
(74) Vertreter: Andrejewski, Walter

(56) Entgegenhaltungen:
- FR-A- 2 478 127
- GB-A- 2 084 122
- GB-A- 2 150 128
- GB-A- 2 207 441

## Beschreibung

Die Erfindung betrifft ein Verfahren für die Herstellung von Rohstoff-Formlingen, insbesondere für die Erzeugung von Silicium oder Siliciumlegierungen im Elektroniederschachtofen, wobei Quarzsand, ein nichtbackender Kohlenstoffträger, vorzugsweise Petrolkoks, und ein pechhaltiges Bindemittel gemischt werden sowie diese Ausgangsmischung zu Vorformlingen brikettiert wird und wobei aus den Vorformlingen durch eine verfestigende Wärmebehandlung die Rohstoff-Formlinge gebildet werden. - Bei der Herstellung solcher Rohstoff-Formlinge wird im allgemeinen mit Quarzsand im Körnungsbereich von 0,05 bis 0,2 mm gearbeitet, und zwar mit unterschiedlichen Körnungsbändern in diesem Bereich. Es versteht sich, daß man den Rohstoff-Formlingen bei der Herstellung von Ferrosilicium auch feinteiliges Eisen oder feinteiliges Eisenoxid zusätzlich beigeben kann. Das Eisen bzw. das Eisenoxid kann aber auch dem Möller des Elektroniederschachtofens beigegeben werden, vorzugsweise in stückiger Form oder pelletiert. Dem Möller gehören im übrigen die Rohstoff-Formlinge und Quarz an. - Die Erfindung betrifft außerdem nach dem Verfahren hergestellte Rohstoff-Formlinge.

An die Rohstoff-Formlinge der angegebenen Zweckbestimmung werden in chemischer und physikalischer Hinsicht besondere Anforderungen gestellt. So ist bei der Erzeugung von Silicium in chemischer Hinsicht darauf zu achten (GB-PS 20 84 122), daß sich in den Rohstoff-Formlingen auf ihrer Reise durch den Elektroniederschachtofen zunächst im oberen Teil nach der Gleichung

SiO₂ + 3 C = SiC + 2 CO

Siliciumcarbid bilden kann. Dazu ist der Gesamtkohlenstoffgehalt in den einzelnen Rohstoff-Formlingen entsprechend einzustellen. Er wird im allgemeinen überstöchiometrisch eingestellt (GB-PS 21 50 128). In physikalischer Hinsicht muß sichergestellt werden, daß die Rohstoff-Formlinge auf ihrer Reise durch den Elektroniederschachtofen und insbesondere bei der Reduktion zu SiC nicht verfallen, um im unteren Teil des Elektroniederschachtofens mit geschmolzenem Quarz nach der Gleichung

SiO₂ + SiC = 3 Si + 2 CO

weiter zu reagieren. Es versteht sich, daß im Elektroniederschachtofen noch weitere Reaktionen ablaufen. Unter anderem bildet sich nach der Gleichung

SiO₂ + C = SiO + CO

bei den hohen Ofentemperaturen flüchtiges Siliciummonoxid, welches teilweise, die Ausbeute und die Wärmebilanz beeinträchtigend, verlorengeht.

Bei dem bekannten Verfahren, von dem die Erfindung ausgeht (DE-OS 37 24 541), wird mit von backender Kohle freien Vorformlingen gearbeitet sowie eine Bindemittelbrikettierung durchgeführt. Die Wärmebehandlung erfolgt in einem beheizten Drehrohrofen, der in seinem unteren Teil so weit mit Quarzsand gefüllt ist, daß die Wärmebehandlung in einem Quarzsandtauchbett erfolgt. Das hat sich bewährt. Insbesondere genügen die so hergestellten Rohstoff-Formlinge allen Beanspruchungen auf ihrer Reise durch den Elektroniederschachtofen und ist sichergestellt, daß die vorstehend angedeuteten chemischen Vorgänge sehr definiert stattfinden. In bezug auf das Langzeitverhalten vor dem Einsatz sind die nach dem bekannten Verfahren hergestellten Rohstoff-Formlinge jedoch verbesserungsbedürftig. Ihre mechanische Festigkeit nimmt bei der Lagerung mit der Zeit, unter Umständen störend, ab. Das wird darauf zurückgeführt, daß Luft in die Rohstoff-Formlinge hineindiffundiert und, insbesondere bei Lagerung im Freien, auch Wasser eindringt, wodurch die Bindungskräfte der inneren Bindung beeinträchtigt werden. Das ist nicht der Fall bei Rohstoff-Formlingen der gleichen Zweckbestimmung, die im Wege der Heißbrikettierung hergestellt worden sind (DE-OS 30 09 808), jedoch ist die Heißbrikettierung verhältnismäßig aufwendig.

Der Erfindung liegt die Aufgabe zugrunde, ein Verfahren für die Herstellung von Rohstoff-Formlingen, insbesondere für die Erzeugung von Silicium oder Siliciumlegierungen im Elektroniederschachtofen, anzugeben, welches zu Rohstoff-Formlingen führt, die nicht nur auf ihrer Reise durch den Elektroniederschachtofen in physikalischer und chemischer Hinsicht allen Anforderungen genügen, sondern sich außerdem durch hervorragendes Langzeitverhalten vor der Einführung in den Elektroniederschachtofen auszeichnen, insbesondere auch beim Transport und bei Lagerung im Freien ihre Festigkeit nicht verlieren.

Zur Lösung dieser Aufgabe lehrt die Erfindung, daß als pechhaltiges Bindemittel eine Bindemittelmischung in Form einer Pech/Kohle-Legierung verwendet wird, in der das Pech und backende Kohle ineinander in Lösung gegangen sind, und die eine Temperatur von über 100°C bis 200°C aufweist, daß der Quarzsand und der nichtbackende Kohlenstoffträger bei einer Mischungstemperatur, die ebenfalls im Temperaturbereich von über 100°C bis 200°C liegt, mit der Bindemittelmischung gemischt werden und die Vorformlinge aus dieser Mischungstemperatur heraus brikettiert werden, und daß die Vorformlinge einer Wärmebehandlung unterworfen werden, die eine Endtemperatur von über 450°C aufweist. Bei dem erfindungsgemäßen Verfahren ist die Brikettierung, mit der die Rohstoff-Formlinge aus den Vorformlingen hergestellt werden, eine Bindemittelbrikettierung, wie sie bei der Herstellung von Steinkohlenbriketts üblich ist. Insoweit kann trotz des hohen Gehaltes der Vorformlinge an Quarzsand die Technologie der bekannten Bindemittelbrikettierung angewendet werden. Im allgemeinen arbeitet man mit üblichen Brikettierpressen und Preßdrücken von 1 bis 2 t/cm². Von einer Pech/Kohle-Legierung wird im Rahmen der Erfindung dann gesprochen, wenn das Pech und die backende Kohle gleichsam ineinander in Lösung gegangen sind und dadurch eine Integration der beiden Bestandteile zu einem neuen legierten Bindemittel stattgefunden hat. Das ist insbesondere dann leicht erreichbar, wenn mit ausreichend feinteiliger Kohle gearbeitet wird.

Überraschenderweise genügen bei Verwendung der angegebenen Bindemittelmischung, die eine Pech/Kohle-Legierung darstellt, und bei Einhaltung der angegebenen Parameter die hergestellten Rohstoff-Formlinge auch in bezug auf das Langzeitverhalten allen Anforderungen. Das ist insbesondere dann der Fall, wenn mit einer Bindemittelmischung gearbeitet wird, die als Pech/Kohle-Legierung ausgebildet ist. In den erfindungsgemäß hergestellten Rohstoff-Formlingen ist die Pech/Kohle-Legierung überraschenderweise unempfindlich gegen eindiffundierende Luft und Feuchtigkeit.

Im einzelnen bestehen im Rahmen der Erfindung mehrere Möglichkeiten der weiteren Ausbildung. So kommt man zu besonders guten Ergebnissen, wenn der Quarzsand, der nichtbackende Kohlenstoffträger und die Bindemittelmischung bei der Mischung die gleiche Temperatur aufweisen und vorzugsweise mit einer Temperatur von etwa 160 °C gearbeitet wird.

Während bei dem eingangs beschriebenen bekannten Verfahren (DE-OS 37 24 541) bei der verfestigenden Wärmebehandlung mit einem Drehrohrofen gearbeitet werden muß, kann erfindungsgemäß die Wärmebehandlung auch auf andere Weise, z. B. auf einem Wanderrost, erfolgen, welches durch einen entsprechenden Ofen oder eine entsprechende Kammer läuft und einschichtig oder mehrschichtig mit den Vorformlingen belegt wird. Eine bevorzugte Ausführungsform ist auch erfindungsgemäß dadurch gekennzeichnet, daß die Vorformlinge in einem Drehrohrofen der verfestigenden Wärmebehandlung unterworfen werden. Man kommt zu einer sehr schonenden Wärmebehandlung und zu hohen Endfestigkeiten, wenn Vorformlinge hergestellt werden, deren spezifisches Gewicht durch Einstellung des Mischungsverhältnisses und der Verdichtung größer ist als das Schüttgewicht von Quarzsand, und wenn diese Vorformlinge zum Zwecke der Wärmebehandlung in einen beheizten Drehrohrofen eingeführt werden, der so weit mit Quarzsand gefüllt ist, daß die Wärmebehandlung der Vorformlinge in einem Quarzsandtauchbett erfolgt. Der Quarzsand hat vorzugsweise eine Temperatur von etwa 500 bis 530 °C, und zwar zumindest im Bereich des Austrittsendes des Drehrohrofens. Dabei wird der Drehrohrofen zweckmäßigerweise so weit mit Quarzsand gefüllt, daß das Quarzsandvolumen größer ist als es dem doppelten Lückenvolumen in einer losen Schüttung der Vorformlinge entspricht. Im übrigen kann erfindungsgemäß insoweit auf die in der DE-OS 37 24 541 offenbarten Technologie zurückgegriffen werden.

Im Sinne einer Optimierung empfiehlt die Erfindung, mit einer Bindemittelmischung zu arbeiten, die, bezogen auf die Ausgangsmischung, aus der die Vorformlinge brikettiert werden, aus zumindest 7 Gew.-% Pech in Form von kohle- und erdölstämmigem Pech, insbesondere Elektrodenpech, und aus zumindest 12 Gew.-% feinkörniger backender Kohle gebildet wurde. Vorzugsweise wird mit einer Bindemittelmischung gearbeitet, die 7 bis 12 Gew.-% Pech und 12 bis 14 Gew.-% feinkörnige backende Kohle aufweist. Vorzugsweise wird fernerhin mit einer Ausgangsmischung gearbeitet, die 20 bis 40 Gew.-% Quarzsand, die Bindemittelmischung und im Rest Petrolkoks aufweist. Vorzugsweise wird mit Quarzsand der Körnung von 0,05 bis 0,2 mm und Petrolkoks einer Körnung von unter 2 mm bei zumindest 60% unter 0,5 mm gearbeitet.

Die erfindungsgemäß hergestellten Rohstoff-Formlinge zeichnen sich durch ihr Langzeitverhalten und durch ihr Verhalten im Elektroniederschachtofen aus. Man Kann der Ausgangsmischung feinteilige mineralische Stoffe beimischen. Dadurch kann eine Aktivierung der Rohstoff-Formlinge erreicht werden, die bei Temperatur über 1500°C zum Tragen kommt. - Die erfindungsgemäß hergestellten Rohstoff-Formlinge können auch im Kupolofen bei der Herstellung von Gußeisen eingesetzt werden, und zwar als Silicium- und Kohlenstoffträger.

Im folgenden wird die Erfindung durch ein Ausführungsbeispiel ausführlicher erläutert. Zum Ausführungsbeispiel gehört eine graphische Darstellung. Die graphische Darstellung hat eine Ordinatenachse, die die Druckfestigkeit der Rohstoff-Formlinge angibt und eine Abzissenachse, auf der die Zeit aufgetragen ist.
1) Um Rohstoff-Formlinge für die Erzeugung von Silicium oder Siliciumlegierungen im Elektroniederschachtofen herzustellen, wurden in einem ersten Versuch
   38 Gew.-% Quarzsand der Körnung 0,08 bis 0,25 mm,
   50 Gew.-% Petrolkoks der Körnung 2 mm, und
   12 Gew.-% Elektrodenpech bei einer Temperatur von 160°C innig gemischt.
   Der Erweichungspunkt des Elektrodenpechs betrug 90°C nach Kaines. Nach Beendigung des Mischvorganges hatte die so hergestellte Ausgangsmischung eine Temperatur von 145°C. - Eine solche Ausgangsmischung entspricht dem Stand der Technik.
   Aus dieser Ausgangsmischung wurden nach ihrer Abkühlung auf 105°C mit einer Brikettierpresse im wesentlichen kugelförmige Vorformlinge eines Durchmessers von rund 2 cm hergestellt, und zwar mit einem Preßdruck von 1,5 t/cm². Die Vorformlinge wurden in einem Drehrohrofen einer erhärtenden Wärmebehandlung unterworfen, wie es in der DE-OS 37 24 541 im einzelnen beschrieben ist. Die hergestellten Rohstoff-Formlinge zeigten nach Lagerung im Freien in bezug auf die Druckfestigkeit ein Langzeitverhalten, wie es in der graphischen Darstellung die Kurve a) verdeutlicht. Sie genügten in dem Druckfestigkeitsbereich vor dem Abfall der Kurve a), das heißt in ihrem Langzeitbereich, im Elektroniederschachtofen in physikalischer und chemischer Hinsicht allen Anforderungen. Der Langzeitbereich ist jedoch verhältnismäßig kurz.
2) In einem zweiten Versuch wurden zunächst ein Gewichtsanteil des im Versuch 1) angegebenen Elektrodenpechs und 1,8 Gewichtsanteile backende Kohle, Körnung 80% zwischen 0,1 bis 0,2 mm, bei einer Temperatur von etwa 160 °C zu einer Pech/Kohle-Legierung verschmolzen. Mit 18% dieser Pech/Kohle-Legierung anstelle des im ersten Versuch eingesetzten Elektrodenpechs, im übrigen jedoch unter den gleichen Bedingungen, wurde der erste Versuch wiederholt, und zwar bis zu den fertigen Rohstoff-Formlingen. Diese zeigten nach Lagerung im Freien in bezug auf die Druckfestigkeit ein Langzeitverhalten, wie es die Kurve b) der graphischen Darstellung erläutert. Der Langzeitbereich ist gegenüber der Kurve a) beachtlich vergrößert.
3) In einem dritten Versuch wurde der Versuch 2) bis zur Herstellung der Vorformlinge wiederholt. Diese wurden jedoch bei gleicher Behandlungszeit und Temperatur auf einem Wanderrost gehärtet. Die Kurve c) zeigt die Druckfestigkeit der so hergestellten Rohstoff-Formlinge. Der Langzeitbereich bleibt verbessert die Druckfestigkeit im abfallenden Bereich der Kurve c) ist gegenüber der Kurve a) erhöht.

Ein Vergleich der Kurven a), b) und c) zeigt die durch das erfindungsgemäße Verfahren erreichten Verbesserungen eindrucksvoll.

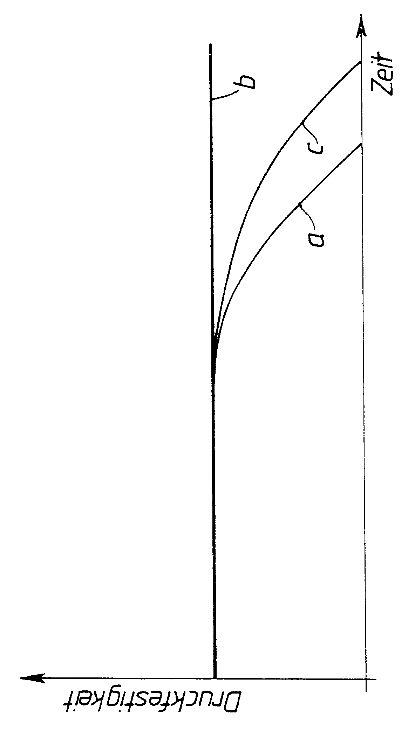

## Patentansprüche

1. Verfahren für die Herstellung von Rohstoff-Formlingen, insbesondere für die Erzeugung von Silicium oder Siliciumlegierungen im Elektroniederschachtofen,
wobei Quarzsand, ein nichtbackender Kohlenstoffträger, vorzugsweise Petrolkoks, und ein pechhaltiges Bindemittel gemischt werden sowie diese Ausgangsmischung zu Vorformlingen brikettiert wird und wobei aus den Vorformlingen durch eine verfestigende Wärmebehandlung die Rohstoff-Formlinge gebildet werden,
**dadurch gekennzeichnet**, daß als pechhaltiges Bindemittel eine Bindemittelmischung in Form einer Pech/Kohle-Legierung verwendet wird, in der das Pech und backende Kohle ineinander in Lösung gegangen sind, und die eine Temperatur von über 100 °C bis 200 °C aufweist,
daß der Quarzsand und der nichtbackende Kohlenstoffträger bei einer Mischungstemperatur, die ebenfalls im Temperaturbereich von über 100°C bis 200°C liegt, mit der Bindemittelmischung gemischt werden und die Vorformlinge aus dieser Mischungstemperatur heraus brikettiert werden,
und daß die Vorformlinge einer Wärmebehandlung unterworfen werden, die eine Endtemperatur von über 450 °C aufweist.

2. Verfahren nach Anspruch 1, dadurch gekennzeichnet, daß der Quarzsand, der nichtbackende Kohlenstoffträger und die Bindemittelmischung bei der Mischung die gleiche Temperatur aufweisen.

3. Verfahren nach Anspruch 2, dadurch gekennzeichnet, daß mit einer Temperatur von etwa 160 °C gearbeitet wird.

4. Verfahren nach einem der Ansprüche 1 bis 3, dadurch gekennzeichnet, daß die Vorformlinge in einem Drehrohrofen der verfestigenden Wärmebehandlung unterworfen werden.

5. Verfahren nach Anspruch 4, dadurch gekennzeichnet, daß Vorformlinge hergestellt werden, deren spezifisches Gewicht durch Einstellung des Mischungsverhältnisses und der Verdichtung größer ist als das Schüttgewicht von Quarzsand, und daß diese Vorformlinge zum Zwecke der Wärmebehandlung in einen beheizten Drehrohrofen eingeführt werden, der so weit mit Quarzsand gefüllt ist, daß die Wärmebehandlung der Vorformlinge in einem Quarzsandtauchbett erfolgt.

6. Verfahren nach Anspruch 5, dadurch gekennzeichnet, daß der Drehrohrofen so weit mit Quarzsand gefüllt wird, daß das Quarzsandvolumen größer ist als es dem doppelten Lückenvolumen in einer losen Schüttung der Vorformlinge entspricht.

7. Verfahren nach einem der Ansprüche 1 bis 6, dadurch gekennzeichnet, daß mit einer Bindemittelmischung gearbeitet wird, die, bezogen auf die Ausgangsmischung, aus der die Vorformlinge brikettiert werden, aus zumindest 7 Gew.-% Pech in Form von kohle- bzw. erdölstämmigem Pech, insbesondere Elektrodenpech, und aus zumindest 12 Gew.-% feinkörniger backender Kohle gebildet wurde.

8. Verfahren nach Anspruch 7, dadurch gekennzeichnet, daß mit einer Ausgangsmischung gearbeitet wird, die 20 bis 40 Gew.-% Quarzsand, die Bindemittelmischung und im Rest Petrolkoks sowie ggf. Aktivatoren aufweist.

9. Verfahren nach Anspruch 8, dadurch gekennzeichnet, daß mit Quarzsand der Körnung von 0,05 bis 0,2 mm und Petrolkoks einer Körnung von unter 2 mm, bei zumindest 60% unter 0,5 mm, gearbeitet wird.

## Claims

1. A process for the manufacture of raw material briquettes, particularly for the production of silicon or silicon alloys in an electric low-shaft furnace,
wherein quartz sand, a non-caking carbon carrier, preferably petroleum coke, and a pitch-containing binder are mixed and this starting mixture is briquetted to form preforms, and wherein the raw material briquettes are formed from the preforms by a hardening heat treatment,
characterised in that a binder mixture in the form of a peat/coal alloy, in which the pitch and caking coal have gone into solution in each other, and which is at a temperature of greater than 100°C to 200°C, is used as the pitch-containing binder,
that the quartz sand and the non-caking carbon carrier are mixed with the binder mixture at a mixing temperature which is likewise in the temperature range of greater than 100°C to 200°C, and the preforms are briquetted out of this mixing temperature,
and that the preforms are subjected to a heat treatment which has a final temperature greater than 450°C.

2. A process according to claim 1, characterised in that the quartz sand, the non-caking carbon carrier and the binder mixture are at the same temperature during the mixing.

3. A process according to claim 2, characterised in that a temperature of about 160°C is employed.

4. A process according to any one of claims 1 to 3, characterised in that the preforms are subjected to the hardening heat treatment in a rotary kiln.

5. A process according to claim 4, characterised in that preforms are manufactured, the specific gravity of which is greater than the bulk density of quartz sand due to adjustment of the mixture ratio and of the compaction, and that these preforms are introduced for the purpose of the heat treatment into a heated rotary kiln which is filled with quartz sand to such an extent that the heat treatment of the preforms is effected in a quartz sand immersion bed.

6. A process according to claim 5, characterised in that the rotary kiln is filled with quartz sand to such an extent that the volume of quartz sand is greater than twice the void volume in a loose pile of preforms.

7. A process according to any one of claims 1 to 6, characterised in that a binder mixture is employed which, based on the starting mixture from which the preforms are briquetted, was formed from at least 7 weight % pitch in the form of pitch derived from coal or petroleum, particularly electrode pitch, and from at least 12 weight % of fine-grained caking coal.

8. A process according to claim 7, characterised in that a starting mixture is employed which contains 20 to 40 weight % quartz sand, the binder mixture, and petroleum coke and optionally activators in the remainder.

9. A process according to claim 8, characterised in that quartz sand is employed of grain size of 0.05 to 0.2 mm, and petroleum coke is employed of grain size of less than 2 mm, with at least 60 % less than 0.5 mm.

## Revendications

1. Procédé de fabrication d'agglomérés de matière première, et en particulier la production de silicium ou d'alliages de silicium dans des bas fourneaux électriques, consistant à
mélanger du sable silicieux, un support de carbone non cokéfiable - et de préférence du coke de pétrole et un liant contenant du goudron, à agglomérer ce mélange de départ pour former les agglomérés de matière première par chauffage de consolidation,
caractérisé en ce qu'on utilise comme liant contenant du goudron poix un mélange de liant sous forme d'alliage de goudron et de charbon, le goudron et le charbon agglutiné s'étant combinés en solution, et qui a été porté à une température de plus de 100°C à 200°C;
que le sable silicieux et le support de carbone non cokéfiable sont mélangés au mélange de liant à une température de mélange qui se situe aussi entre plus de 100°C et 200°C et que les agglomérés sont produits à cette température;
et que les agglomérés subissent un traitement thermique, dont la température finale est supérieur à 450°C.

2. Procédé selon la revendication 1, caractérisé en ce que le sable slicieux, le support de carbone non cokéfiable et le mélange de liant sont à la même température lors du mélange.

3. Procédé selon la revendication 2, caractérisé en ce qu'il s'effectue à une température d'environ 160°C.

4. Procédé selon l'une des revendications 1 à 3, caractérisé en ce que les agglomérés subissent un chauffage de consolidation dans un four rotatif.

5. Procédé selon la revendication 4, caractérisé en ce qu'en règlant les proportions du mélange et la densité, on produit des agglomérés dont le poids spécifique est supérieur au poids de matière déversée non tassée du sable silicieux et que, pour subir le traitement thermique, ces agglomérés sont introduits dans un four rotatif chauffé, qui est rempli de sable silicieux de manière à ce que le chauffage des agglomérés se fasse sur un lit échangeur de sable silicieux.

6. Procédé selon la revendication 5, caractérisé en ce que le four rotatif est rempli de sable silicieux de manière à ce que le volume de sable silicieux soit supérieur au double du volume des vides entre les agglomérés amoncelés en vrac.

7. Porcédé selon l'une des revendications 1 à 6, caractérisé en ce qu'on utilise un mélange de liant qui, par comparaison avec le mélange de départ avec lequel on produit les agglomérés, est constitué d'au-moins 7% en poids de goudron sous forme de brai de pétrole et/ou de goudron de houille - et en particulier de brai à électrodes - et d'au-moins 12% en poids de charbon agglutiné à grain fin.

8. Procédé selon la revendication 7, caractérisé en ce qu'on utilise un mélange de départ, qui comporte 20 à 40% en poids de sable silicieux, le mélange de liant et pour le reste du coke de pétrole, ainsi que, le cas échéant, des activateurs.

9. Procédé selon la revendication 8, caractérisé en ce qu'on se sert de sable silicieux ayant une granulation de 0,05 mm à 0,2 mm, et de coke de pétrole ayant une granulation inférieure à 2 mm et, pour 60% au-moins, inférieur à 0,5 mm.
